# EUROPÄISCHE PATENTSCHRIFT

(11) **EP 1 724 482 B1**
(45) Veröffentlichungstag und Bekanntmachung des Hinweises auf die Patenterteilung: **09.01.2013**
(21) Anmeldenummer: 06009482.8
(22) Anmeldetag: 09.05.2006
(51) Int. Cl.: F16D 13/64

(54) **Kupplungsscheibe für eine Kupplungseinrichtung**
Clutch plate for a clutch assembly
Disque d'embrayage pour un dispositif d'embrayage

(30) Priorität: 17.05.2005 DE 102005023332
(43) Veröffentlichungstag der Anmeldung: 22.11.2006
(73) Patentinhaber: ZF Friedrichshafen AG, 88046 Friedrichshafen (DE)
(72) Erfinder: Bokisch, Winfried, 97490 Poppenhausen (DE)

(56) Entgegenhaltungen:
- DE-A1- 2 751 043
- GB-A- 463 768
- US-A- 2 244 134
- US-A- 4 869 356

## Beschreibung

Die Erfindung betrifft eine Kupplungsscheibe für eine Kupplungseinrichtung, insbesondere für eine Kraftfahrzeugkupplungseinrichtung, die eine um eine Drehachse herum angeordnete Trägerscheibe aufweist, an der am radialen Außenrand eine Anzahl Flügelelemente befestigt sind, wobei an den Flügelelementen mindestens ein Reibbelag befestigt ist und wobei jedes Flügelelement einen ersten, sich in Umfangsrichtung erstreckenden ringförmigen Flügelabschnitt aufweist, der auf einem ersten, äußeren Radiusbereich liegt und welches weiter einen zweiten, sich in Umfangsrichtung erstreckenden ringförmigen Flügelabschnitt aufweist, der auf einem zweiten inneren Radiusbereich liegt, wobei sich die beiden Radienbereiche nicht überschneiden.

Kupplungsscheiben dieser Art sind beispielsweise aus dem US-Patent Nr. 2,244,134 und aus der DE 27 16 462 1A bekannt. Solche Kupplungsscheiben haben jeweils eine Trägerscheibe, an der eine Anzahl Flügelelemente aus dünnem, elastischem Federblech festgenietet sind. Bei der in der US 2,244,134 dargestellten Lösung umfasst ein Flügelelement jeweils zwei umfangsmässig beabstandete und durch ein Kreissegment miteinander verbundene, nach radial außen weisende Tragabschnitte, von denen jeweils zwei radial gestaffelte und in Umfangsrichtung weisende Flügelabschnitte in den gebildeten Zwischenraum hineinragen. Die Flügelabschnitte sind wellig mit Berg- und Talabschnitten ausgeführt, wobei auf einem Radienstrahl der Kupplungsscheibe auf einen Berg eines Flügelabschnitts ein Tal eines radial benachbarten Flügelabschnitts desselben Flügelelementes folgt. Bei der mit der DE 27 16 462 A1 bekannt gewordenen Kupplungsscheibe weisen die Flügelelemente jeweils einen sich baumartig radial erstreckenden Basisbereich mit sich davon beidseitig in Umfangsrichtung ausbreitenden und radial gestaffelten Flügelabschnitten auf, welche dort ebenflächig ausgeführt sind. Bei diesen beiden bekannten Kupplungsscheiben ist an den Federblechen wiederum ein Reibbelag mittels Nieten befestigt. Damit wird eine axial federelastische Anbindung des Reibbelags an der Trägerscheibe erreicht. Die Kupplungsscheibe wird in der Kupplungseinrichtung zwischen einer Anpressplatte und einem Schwungrad angeordnet. Durch Beaufschlagung der Anpressplatte mit einer axial wirkenden Kraft wird Reibschluss zwischen Anpressplatte, Kupplungsscheibe und Schwungrad hergestellt, wodurch ein Drehmoment übertragen werden kann. Dabei wirkt zwischen zwei Reibpartnern, also einerseits zwischen der Anpressplatte und der Kupplungsscheibe und andererseits zwischen der Kupplungsscheibe und dem Schwungrad, eine Reibkraft, die sich aus dem Produkt aus Anpresskraft und Reibkoeffizient ergibt.

Eine ähnliche Ausgestaltung einer Kupplungsscheibe ist aus der DE 23 02 808 A1 bekannt. Auch hier sind Flügelelemente an einer Trägerscheibe befestigt. Um für den Kupplungs-Einrückvorgang eine ausreichende Eigensteifigkeit und auch eine stoßdämpfende Eigenschaft zu erzielen, ist unter anderem vorgesehen, dass die Flügelelemente nicht eben, sondern wellig ausgebildet sind miteinem Talabschnitt und einem Bergabschnitt, wobei beide Bereiche in unterschiedlichen axialen Ebenen liegen.

Bei der mit der DE 27 51 043 A1 offenbarten Kupplungsscheibe sind die Flügelabschnitte einteilig mit bzw. an einer Trägerscheibe ausgeführt und bezüglich der Erstreckung in Umfangsrichtung asymmetrisch, jedoch innerhalb desselben Radialbereiches ausgebildet. Die Flügelabschnitte sind dort ebenfalls wellig ausgeführt, so dass Tal- und Bergabschnitte gebildet werden, in denen der Reibbelag angebunden ist.

Eine weitere derartige Kupplungsscheibe ist in der GB 463,768 beschrieben, wobei sich jedoch im Unterschied zu der in der DE 27 51 043 beschriebenen Kupplungsscheibe jeweils ein Flügelabschnitt in einem radial inneren und ein zweiter Flügelabschnitt in einem dazu radial äußeren Bereich der Kupplungsscheibe erstreckt, so dass in radialer Richtung zwei verschiedene Flügelabschnitte von zwei benachbarten Flügeln aufeinanderfolgen.

Schließlich wird in dem US-Patent Nr. 4,869,356 eine Kupplungsscheibe mit drei symmetrisch am Umfang verteilten nach radial außen abstehenden Lappen offenbart. Die Lappen weisen jeweils eine Ausnehmung auf, in welche von den umfangsmässig beabstandeten Randbereichen zwei frei stehende Stege abragen, welche bezüglich einer Rotationsachse in entgegengesetzte Richtungen aus der Scheibenebene leicht herausgebogen sind. Auf diese Weise werden die an der Kupplungsscheibe beidseitig der Lappen angeordneten Belagsegmenten mit einer axialen Federvorspannung beaufschlagt.

Es hat sich herausgestellt, dass sich bei derartigen Kupplungseinrichtungen mit gattungsgemäßen Kupplungsscheiben bereits nach geringer Laufzeit ein relativ großer Belagfederwegrückgang einstellt, der typischerweise im Bereich zwischen 0,3 und 0,4 mm bei Pkw-Kupplungen liegt. Kommen die vorbekannten Flügelelemente mit welliger Form, also mit "Bergen" und "Tälern", zum Einsatz, ist der Abstand zwischen "Bergen" und "Tälern" so groß, dass der Reibbelag durch die große Belastung der Druckplatte stark durchhängt und sich in die Vertiefungen legen kann. Dies hat zur Folge, dass die Belastung und damit der Verschleiß an den Erhebungen besonders stark sind, was den großen Belagfederwegrückgang zur Folge hat. Es kommt also in negativer Weise zu einem relativ starken Eingraben der Kupplungsreibbeläge in die Auflagestellen mit der Belagfederung.

Der Erfindung liegt daher die A u f g a b e zugrunde, eine Kupplungsscheibe der eingangs genannten Art so fortzubilden, dass diese Nachteile vermieden bzw. reduziert werden. Es soll also sichergestellt werden, dass es zu keinen (so starken) Eingrabungen der Kupplungsreibbeläge in die Auflagestellen mit der Belagfederung mehr kommt.

Die L ö s u n g dieser Aufgabe durch die Erfindung ist dadurch gekenntzeichnet, dass sich die beiden Flügelabschnitte von der Befestigungsstelle des Flügelelements an der Trägerscheibe aus in unterschiedliche Umfangsrichtungen erstrecken, wobei die beiden Flügelabschnitte des Flügelelements so ausgebildet sind, dass sich die Flügelabschnitte zweier benachbart an der Trägerscheibe angeordneter Flügelelemente weitgehend zu einem Ringabschnitt ergänzen, wobei die beiden Flügelabschnitte wellig ausgebildet sind und jeder Flügelabschnitt mindestens eine Erhebung und/oder eine Vertiefung aufweist, die jeweils ein in axiale Richtung ausgebildetes, vorzugsweise im wesentlichen rechteckförmiges Plateau bilden und mindestens eine Erhebung oder Vertiefung eines Flügelabschnitts und eine Vertiefung oder Erhebung des Flügelabschnitts eines benachbart an der Trägerscheibe angeordneten Flügelelements auf einem Radienstrahl liegen.

Bevorzugt weisen die beiden Radienbereiche eine etwa gleich große radiale Erstreckung auf. Weiterhin kann die Erstreckung der beiden Flügelabschnitte in Umfangsrichtung unterschiedlich groß sein. Die Plateaus können dabei unter einem Winkel zur radialen Richtung angeordnet sein. Der Winkel liegt bevorzugt zwischen 15° und 50°. Dabei kann die Orientierung der winkeligen Anordnung der Plateaus der auf einem Radienstrahl liegenden Plateaus benachbarter Flügelelemente gegensinnig sein.

Mindestens ein Flügelabschnitt kann mindestens eine Bohrung für ein Befestigungselement aufweisen, mit denen der mindestens eine Reibbelag am Flügelabschnitt befestigt ist. Dabei kann vorgesehen sein, dass nur ein Flügelabschnitt die mindestens eine Bohrung für ein Befestigungselement aufweist. Die Erstreckung in Umfangsrichtung des mit mindestens einer Bohrung versehenen Flügelabschnitts ist vorzugsweise größer als diejenige des anderen Flügelabschnitts.

Der mindestens eine Reibbelag ist bevorzugt mit den Flügelelementen durch eine Anzahl Nieten verbunden. Genauso kann vorgesehen werden, dass die Flügelelemente mit der Trägerscheibe durch eine Anzahl Nieten verbunden sind.

Durch den Erfindungsvorschlag wird der Abstand zwischen "Bergen" und "Tälern" über den Umfang der Fläche des Reibbelags verkleinert, wodurch ein Durchhängen des Reibbelags wesentlich verringert wird. Es wird damit auch ein Eingraben des Reibbelags in die Auflagestellen mit der Belagfeder wesentlich verringert, was im Ergebnis einen weniger signifikanten Rückgang des Belagfederwegs über der Laufzeit zur Folge hat. Die Kupplungseinrichtung, die mit der erfindungsgemäßen Kupplungsscheibe ausgestattet ist, zeichnet sich somit auch durch verbesserten Einkuppelkornfort aus.

### In der Zeichnung ist ein Ausführungsbeispiel der Erfindung dargestellt. Es zeigen:

- Fig. 1: einen teilweise unterbrochenen Radialschnitt durch eine Kupplungsscheibe einer Kraftfahrzeugkupplungseinrichtung, nämlich den Schnitt A-A gemäß Fig. 2,
- Fig. 2: die Vorderansicht der Kupplungsscheibe nach Fig. 1,
- Fig. 3: den Schnitt C-D durch die Kupplungsscheibe gemäß Fig. 2,
- Fig. 4: die Vorderansicht eines Flügelelements der Kupplungsscheibe,
- Fig. 5: den Schnitt E-F durch das Flügelelement gemäß Fig. 4,
- Fig. 6: den Schnitt G-H durch das Flügelelement gemäß Fig. 4 und
- Fig. 7: die Vorderansicht eines Teils der Kupplungsscheibe, nämlich der Flügelelemente und des Reibbelags.

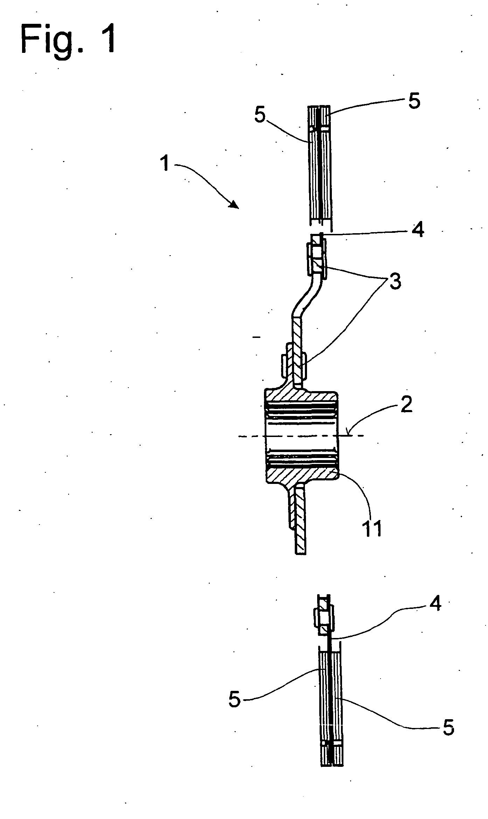

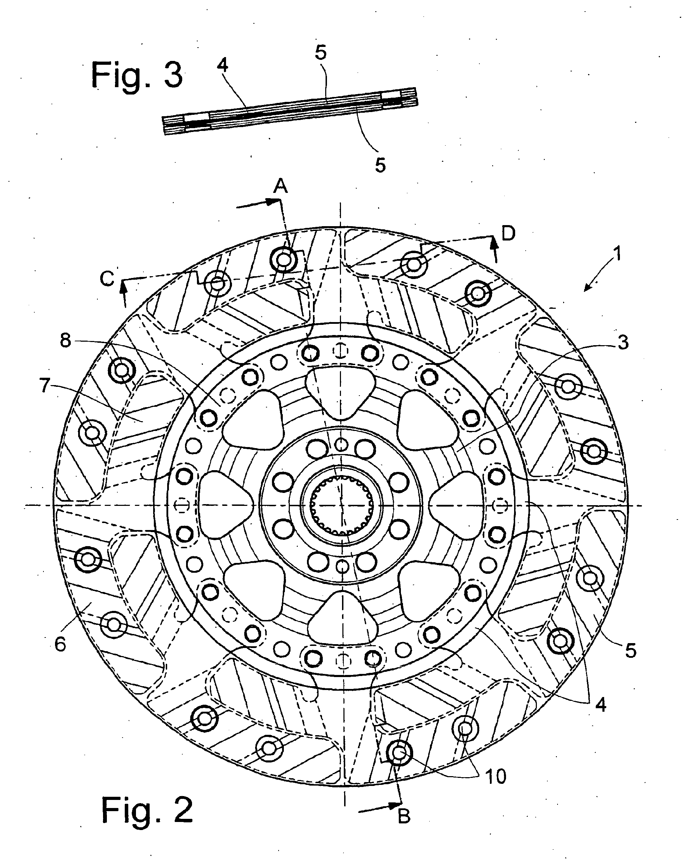

In den Figuren 1 und 2 eine Kupplungsscheibe 1 dargestellt, die in einer Kupplungseinrichtung zwischen einer Anpressplatte und einem Schwungrad angeordnet wird. Die Kupplungsscheibe 1 rotiert dabei im Betrieb um die Drehachse 2. Zur Aufnahme auf einer nicht dargestellten Welle weist die Kupplungsscheibe 1 im Bereich der Drehachse 2 ein Nabenteil 11 mit Vielkeil-Innenprofil auf.

Die Kupplungsscheibe 1 hat im radial inneren Bereich eine Trägerscheibe 3, an der radial außen eine Anzahl Flügelelemente 4 befestigt sind. Die Flügelelemente 4 sind an der Trägerscheibe 3 an einer Befestigungsstelle 8 mittels einer Anzahl Nieten befestigt.

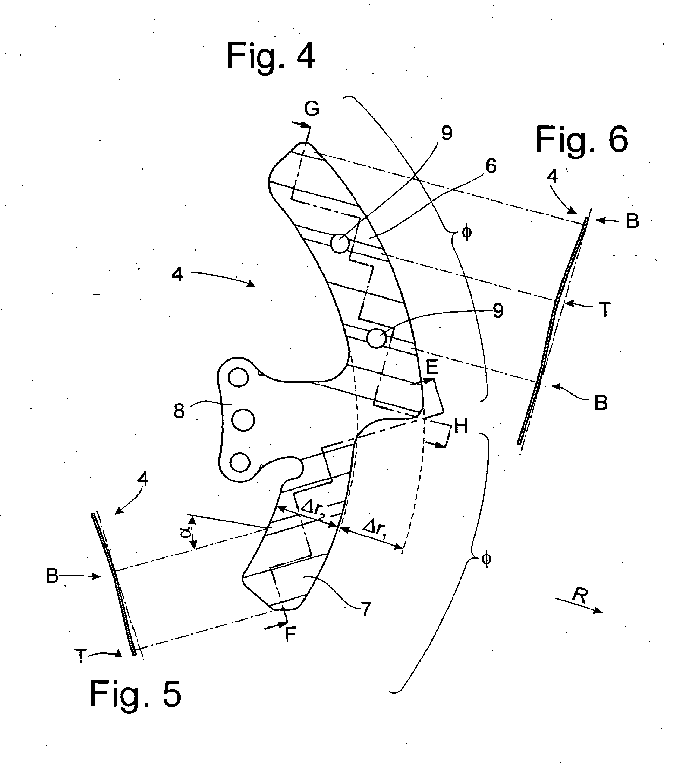

Beidseitig der Flügelelemente 4 sind Reibbeläge 5 befestigt, wobei ebenfalls eine Nietverbindung zum Einsatz kommt: Teile der Flügelelemente 4 weisen hierzu Bohrungen 9 auf (s. Fig. 4), durch die Befestigungselemente 10 in Form von Nieten geführt sind.

Die spezielle Form der zum Einsatz kommenden Flügelelemente 4 ist in Fig. 4 zu sehen. Jedes Flügelelement 4 hat zwei Flügelabschnitte 6 und 7, die sich - von der Befestigungsstelle 8 des Flügelelements 4 an der Trägerscheibe 3 aus betrachtet - in unterschiedliche Umfangsrichtungen weg erstrecken. Dabei ist einmal ein erster Flügelabschnitt 6 vorgesehen, der sich über eine Umfangserstreckung Φ erstreckt.

Dann ist ein zweiter Flügelabschnitt 7 vorhanden, der sich über eine geringere Umfangserstreckung φ erstreckt. Beide Flügelabschnitte 6, 7 liegen auf sich nicht überschneidenden Radiusbereichen, wie in Fig. 4 angedeutet ist. Der äußere, erste Flügelabschnitt 6 liegt auf dem mit Δr₁ gekennzeichneten Radiusbereich, der außerhalb des mit Δr₂ gekennzeichneten Radiusbereichs liegt, über den sich der zweite Flügelabschnitt 7 radial erstreckt.

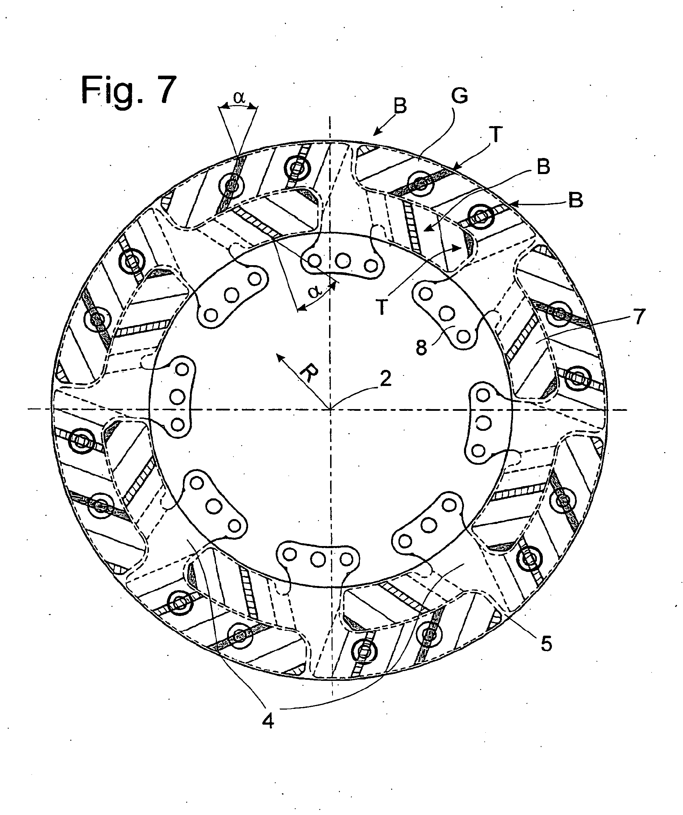

Mit dieser geometrischen Ausgestaltung der Flügelabschnitte 6, 7 der Flügelelemente 4 ergibt sich, dass sich die benachbarten Flügelabschnitte 6, 7 aneinander grenzender Flügelelemente 4 insgesamt zu einem Ring ergänzen, s. Fig. 2 oder Fig. 7, an den die Reibbeläge 5 angebracht sind.

Aus den' Schnittdarstellungen der Figuren 5 und 6 geht hervor, dass die Flügelelemente 6, 7 nicht eben, sondern wellig ausgebildet sind. Der Flügelabschnitt 6 (s. Fig. 6) weist zwei Erhebungen ("Berge") B auf, zwischen denen eine Vertiefung T ("Tal") liegt.

Entsprechend weist der in Umfangsrichtung betrachtet kürzere Flügelabschnitt 7 (s. Fig. 5) nur eine Erhebung B und eine Vertiefung T auf.

Wie insbesondere Fig. 7 entnommen werden kann, sind die Erhebungen B und Vertiefungen T im wesentlichen als rechteckig ausgebildetes Plateau ausgeführt. In Fig. 7 sind Erhebungen B und Vertiefungen T unterschiedlich schraffiert dargestellt. Dort ist auch zu sehen, dass in radiale Richtung, also entlang eines Radienstrahls R betrachtet, die Erhebungen B und Vertiefungen T unter einem Winkel α zur radialen Richtung R ausgerichtet sind, und zwar gegensinnig, d. h. Erhebungen B und Vertiefungen T des äußeren ersten Flügelabschnitts 6 sind entgegengesetzt zu den Erhebungen B und Vertiefungen T des inneren zweiten Flügelabschnitts 7 orientiert.

Zu erkennen ist in Fig. 7 insbesondere, dass die Vertiefung T des äußeren Flügelabschnitts 6 und die Erhöhung B des inneren Flügelabschnitts 7 des benachbarten Flügelelements 4 im wesentlichen auf einem Radienstrahl R liegen. Damit wird erreicht, dass kein so starkes Eingraben des Reibbelags 5 in die Auflagestellen mit der Belagfeder erfolgt, wodurch ein weniger starker Rückgang des Belagfederweges über der Laufzeit die Folge ist.

### Bezugszeichenliste

- 1: Kupplungsscheibe
- 2: Drehachse
- 3: Trägerscheibe
- 4: Flügelelement
- 5: Reibbelag
- 6: erster Flügelabschnitt
- 7: zweiter Flügelabschnitt
- 8: Befestigungsstelle
- 9: Bohrung
- 10: Befestigungselement
- 11: Nabenteil

- Δr₁: erster, äußerer Radiusbereich
- Δr₂: zweiter, innerer Radiusbereich
- Φ: Umfangserstreckung des ersten Flügelabschnitts
- φ: Umfangserstreckung des zweiten Flügelabschnitts
- B: Erhebung (Berg)
- T: Vertiefung (Tal)
- α: Winkel
- R: Radienstrahl / radiale Richtung

## Patentansprüche

1. Kupplungsscheibe (1 ) für eine Kupplungseinrichtung, insbesondere für eine Kraftfahrzeugkupplungseinrichtung, die eine um eine Drehachse (2) herum angeordnete Trägerscheibe (3) aufweist, an der am radialen Außenrand eine Anzahl Flügelelemente (4) befestigt sind, wobei an den Flügelelementen (4) mindestens ein Reibbelag (5) befestigt ist, wobei jedes Flügelelement (4) einen ersten, sich in Umfangsrichtung erstreckenden ringförmigen Flügelabschnitt (6) aufweist, der auf einem ersten, äußeren Radiusbereich (M₁) liegt, und einen zweiten, sich in Umfangsrichtung erstreckenden ringförmigen Flügelabschnitt (7) aufweist, der auf einem zweiten inneren Radiusbereich (Ar₂) liegt, wobei sich die beiden Radienbereiche (Δr₁, Δr₂) nicht überschneiden,
**dadurch gekennzeichnet,**
**dass** sich die beiden Flügelabschnitte (6, 7) von der Befestigungsstelle (8) des Flügelelements (4) an der Trägerscheibe (3) aus in unterschiedliche Umfangsrichtungen erstrecken, wobei die beiden Flügelabschnitte (6, 7) des Flügelelements (4) so ausgebildet sind, dass sich die Flügelabschnitte (6, 7) zweier benachbart an der Trägerscheibe (3) angeordneter Flügelelemente (4) weitgehend zu einem Ringabschnitt ergänzen, wobei die beiden Flügelabschnitte (6, 7) wellig ausgebildet sind und jeder Flügelabschnitt (6, 7) mindestens eine Erhebung (B) und/oder eine Vertiefung (T) aufweist, die jeweils ein in axiale Richtung ausgebildetes, vorzugsweise im wesentlichen rechteckförmiges Plateau bilden und mindestens eine Erhebung (B) oder Vertiefung (T) eines Flügelabschnitts (6, 7) und eine Vertiefung (T) oder Erhebung (B) des Flügelabschnitts (6, 7) eines benachbart an der Trägerscheibe (3) angeordneten Flügelelements (4) auf einem Radienstrahl (R) liegen.

2. Kupplungsscheibe nach Anspruch 1, **dadurch gekennzeichnet, dass** die beiden Radienbereiche (Δr₁, Δr₂) eine etwa gleich große radiale Erstreckung aufweisen.

3. Kupplungsscheibe nach Anspruch 1 oder 2, **dadurch gekennzeichnet, dass** die Erstreckung (Φ, φ) der beiden Flügelabschnitte (6, 7) in Umfangsrichtung unterschiedlich groß ist.

4. Kupplungsscheibe nach einem der Ansprüche 1-3, **dadurch gekennzeichnet, dass** die Plateaus (B, T) unter einem Winkel (α) zur radialen Richtung (R) angeordnet sind.

5. Kupplungsscheibe nach Anspruch 4, **dadurch gekennzeichnet, dass** der Winkel (α) zwischen 15° und 50° liegt.

6. Kupplungsscheibe nach Anspruch 4 oder 5, **dadurch gekennzeichnet, dass** die Orientierung der winkeligen Anordnung der Plateaus (B, T) der auf einem Radienstrahl (R) liegenden Plateaus (B, T) benachbarter Flügelelemente (4) gegensinnig ist.

7. Kupplungsscheibe nach einem der Ansprüche 1 bis 6, **dadurch gekennzeichnet, dass** mindestens ein Flügelabschnitt (6, 7) mindestens eine Bohrung (9) für ein Befestigungselement (10) aufweist, mit denen der mindestens eine Reibbelag (5) am Flügelabschnitt (6, 7) befestigt ist.

8. Kupplungsscheibe nach Anspruch 7, **dadurch gekennzeichnet, dass** nur ein Flügelabschnitt (6) die mindestens eine Bohrung (9) für ein Befestigungselement (10) aufweist.

9. Kupplungsscheibe nach einem der Ansprüche 3 bis 8, **dadurch gekennzeichnet, dass** die Erstreckung in Umfangsrichtung (4_{'}) des mit mindestens einer Bohrung (9) versehenen Flügelabschnitts (6) größer ist als diejenige (φ) des anderen Flügelabschnitts (7).

10. Kupplungsscheibe nach einem der Ansprüche 1 bis 9, **dadurch gekennzeichnet, dass** der mindestens eine Reibbelag (5) mit den Flügelelementen (4) durch eine Anzahl Nieten verbunden ist.

11. Kupplungsscheibe nach einem der Ansprüche 1 bis 10, **dadurch gekennzeichnet, dass** die Flügelelemente (4) mit der Trägerscheibe (3) durch eine Anzahl Nieten verbunden sind.

## Claims

1. Clutch plate (1) for a clutch device, in particular for a motor-vehicle clutch device, which clutch plate (1) has a carrier plate (3) which is arranged around a rotational axis (2) and to which a number of flank elements (4) are fastened at the radial outer edge, at least one friction lining (5) being fastened to the flank elements (4), each flank element (4) having a first annular flank section (6) which extends in the circumferential direction and lies on a first, outer radius region (Δr₁), and having a second annular flank section (7) which extends in the circumferential direction and lies on a second inner radius region (Δr₂), the two radius regions (Δr₁, Δr₂) not intersecting one another, **characterized in that** the two flank sections (6, 7) extend in different circumferential directions from the fastening point (8) of the flank element (4) on the carrier plate (3), the two flank sections (6, 7) of the flank element (4) being configured in such a way that the flank sections (6, 7) of two flank elements (4) which are arranged adjacently on the carrier plate (3) complement one another largely to form an annular section, the two flank sections (6, 7) being of undulating configuration and each flank section (6, 7) having at least one elevation (B) and/or one depression (T) which in each case form a preferably substantially rectangular plateau which is formed in the axial direction, and at least one elevation (B) or depression (T) of a flank section (6, 7) and a depression (T) or elevation (B) of the flank section (6, 7) of a flank element (4) which is arranged adjacently on the carrier plate (3) lying on one radius (R).

2. Clutch plate according to Claim 1, **characterized in that** the two radius regions (Δr₁, Δr₂) have an approximately equally great radial extent.

3. Clutch plate according to Claim 1 or 2, **characterized in that** the extent (Φ, □) of the two flank sections (6, 7) is of different size in the circumferential direction.

4. Clutch plate according to one of Claims 1 to 3, **characterized in that** the plateaus (B, T) are arranged at an angle (α) with respect to the radial direction (R).

5. Clutch plate according to Claim 4, **characterized in that** the angle (α) lies between 15° and 50°.

6. Clutch plate according to Claim 4 or 5, **characterized in that** the orientation of the angular arrangement of the plateaus (B, T) of those plateaus (B, T) of adjacent flank elements (4) which lie on one radius (R) is in the opposite direction.

7. Clutch plate according to one of Claims 1 to 6, **characterized in that** at least one flank section (6, 7) has at least one hole (9) for a fastening element (10), by way of which the at least one friction lining (5) is fastened to the flank section (6, 7).

8. Clutch plate according to Claim 7, **characterized in that** only one flank section (6) has the at least one hole (9) for a fastening element (10).

9. Clutch plate according to one of Claims 3 to 8, **characterized in that** the extent in the circumferential direction (Φ) of the flank section (6) which is provided with at least one hole (9) is greater than that (□) of the other flank section (7).

10. Clutch plate according to one of Claims 1 to 9, **characterized in that** the at least one friction lining (5) is connected to the flank elements (4) by a number of rivets.

11. Clutch plate according to one of Claims 1 to 10, **characterized in that** the flank elements (4) are connected to the carrier plate (3) by a number of rivets.

## Revendications

1. Disque d'embrayage (1) pour un dispositif d'embrayage, en particulier pour un dispositif d'embrayage de véhicule automobile, qui présente un disque de support (3) disposé autour d'un axe de rotation (2), sur lequel est fixée une pluralité d'éléments d'ailettes (4) au niveau du bord extérieur radial, au moins une garniture de friction (5) étant fixée sur les éléments d'ailettes (4), chaque élément d'ailette (4) présentant une première portion d'ailette (6) de forme annulaire, s'étendant dans la direction périphérique, qui se situe sur une première plage de rayon extérieure (Δr₁) et une deuxième portion d'ailette (7) de forme annulaire, s'étendant dans la direction périphérique, qui se situe sur une deuxième plage de rayon intérieure (Δr₂), les deux plages de rayon (Δr₁, Δr₂) ne se coupant pas,
**caractérisé en ce que**
les deux portions d'ailette (6, 7) s'étendent depuis le point de fixation (8) de l'élément d'ailette (4) sur le disque de support (3) dans des directions périphériques différentes, les deux portions d'ailette (6, 7) de l'élément d'ailette (4) étant réalisées de telle sorte que les portions d'ailette (6, 7) de deux éléments d'ailette (4) disposés l'un à côté de l'autre sur le disque de support (3) se complètent sensiblement pour former une portion annulaire, les deux portions d'ailette (6, 7) étant réalisées sous forme ondulée et chaque portion d'ailette (6, 7) présentant au moins un rehaussement (B) et/ou un renfoncement (T) qui forment à chaque fois un plateau de préférence de forme sensiblement rectangulaire réalisé dans la direction axiale et au moins un rehaussement (B) ou un renfoncement (T) d'une portion d'ailette (6, 7) et un renfoncement (T) ou un rehaussement (B) de la portion d'ailette (6, 7) d'un élément d'ailette (4) disposé à côté du disque de support (3) étant situés sur une droite de rayon (R).

2. Disque d'embrayage selon la revendication 1, **caractérisé en ce que** les deux plages de rayon (Δr₁, Δr₂) présentent une étendue radiale approximativement identique.

3. Disque d'embrayage selon la revendication 1 ou 2, **caractérisé en ce que** l'étendue (Φ, φ) des deux portions d'ailette (6, 7) dans la direction périphérique est différente.

4. Disque d'embrayage selon l'une quelconque des revendications 1 à 3, **caractérisé en ce que** les plateaux (B, T) sont disposés suivant un angle (α) par rapport à la direction radiale (R).

5. Disque d'embrayage selon la revendication 4, **caractérisé en ce que** l'angle (α) est compris entre 15°et 50°.

6. Disque d'embrayage selon la revendication 4 ou 5, **caractérisé en ce que** l'orientation de l'agencement angulaire des plateaux (B, T) des plateaux (B, T) situés sur une droite de rayon (R) d'éléments d'ailette adjacents (4) est en sens inverse.

7. Disque d'embrayage selon l'une quelconque des revendications 1 à 6, **caractérisé en ce qu'**au moins une portion d'aile (6, 7) présente au moins un alésage (9) pour un élément de fixation (10) avec lequel l'au moins une garniture de friction (5) est fixée à la portion d'aile (6, 7).

8. Disque d'embrayage selon la revendication 7, **caractérisé en ce que** seule une portion d'aile (6) présente l'au moins un alésage (9) pour un élément de fixation (10).

9. Disque d'embrayage selon l'une quelconque des revendications 3 à 8, **caractérisé en ce que** l'étendue dans la direction périphérique (Φ) de la portion d'aile (6) munie de l'au moins un alésage (9) est supérieure à celle (φ de l'autre portion d'aile (7).

10. Disque d'embrayage selon l'une quelconque des revendications 1 à 9, **caractérisé en ce que** l'au moins une garniture de friction (5) est connectée aux éléments d'ailette (4) par un certain nombre de rivets.

11. Disque d'embrayage selon l'une quelconque des revendications 1 à 10, **caractérisé en ce que** les éléments d'ailettes (4) sont connectés au disque de support (3) par un certain nombre de rivets.
